(19) Europäisches Patentamt
European Patent Office
Office européen des brevets

(11) Veröffentlichungsnummer: **0 104 396**
**B1**

(12) # EUROPÄISCHE PATENTSCHRIFT

(45) Veröffentlichungstag der Patentschrift: **13.11.85**

(51) Int. Cl.⁴: **C 07 C 87/50** // C07C119/048

(21) Anmeldenummer: **83108027.0**

(22) Anmeldetag: **13.08.83**

(54) **Verfahren zur Herstellung von Diaminen oder Diamingemischen.**

(30) Priorität: **27.08.82 DE 3231912**

(43) Veröffentlichungstag der Anmeldung:
**04.04.84 Patentblatt 84/14**

(45) Bekanntmachung des Hinweises auf die Patenterteilung:
**13.11.85 Patentblatt 85/46**

(84) Benannte Vertragsstaaten:
**BE CH DE FR GB IT LI**

(56) Entgegenhaltungen:
**EP - A - 0 024 665**
**FR - A - 2 359 115**
**US - A - 2 511 028**

(73) Patentinhaber: **BAYER AG, Konzernverwaltung RP Patentabteilung, D-5090 Leverkusen 1 Bayerwerk (DE)**

(72) Erfinder: **Knöfel, Hartmut, Dr., Duelmener Weg 21, D-5068 Odenthal (DE)**
Erfinder: **Brockelt, Michael, Neuenhauser Weg 21, D-5060 Bergisch-Gladbach (DE)**
Erfinder: **Penninger, Stefan, Dr., Pommernallee 5, D-4047 Dormagen 1 (DE)**

**EP 0 104 396 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung von neuen, am aromatischen Ring monosubstituierten, diprimären Aminocyclohexylmethylanilinen, die gegebenenfalls Isomerengemische darstellen und/oder die gegebenenfalls im Gemisch mit untergeordneten Mengen an den entsprechenden unhydrierten bzw. perhydrierten Diaminen vorliegen durch katalytische Teilhydrierung der ihnen zugrundeliegenden aromatischen Diamine oder Dinitroverbindungen.

Unsubstituierte oder an beiden Ringen substituierte Aminocyclohexyl-alkyl-aniline sind aus der US-PS 2 511 028 bereits bekannt. Sie eignen sich beispielsweise als Zwischenprodukte zur Herstellung von Farbstoffen, Kautschuk-Hilfsmitteln, oberflächenaktiven Substanzen, Polyamiden, Polyester-polyamiden oder als Korrosionsschutzmittel. Gemäß der Lehre der genannten Vorveröffentlichung werden die Verbindungen durch katalytische Teilhydrierung der ihnen zugrundeliegenden aromatischen Diamine hergestellt. Dieses Verfahren ist jedoch mit dem Nachteil behaftet, daß die asymmetrische Hydrierung der Diamino-diphenyl-alkane nicht selektiv durchführbar ist, so daß die Ausbeute der genannten teilhydrierten Diamine, wie den Ausführungsbeispielen der Vorveröffentlichung zu entnehmen, max. nur wenig über 50% der Theorie beträgt.

Da die primären Aminocyclohexyl-methyl-aniline nicht nur wertvolle Zwischenprodukte für die bereits genannten Einsatzgebiete, sondern insbesondere auch interessante Kettenverlängerungsmittel mit Aminogruppen abgestufter Reaktivität für die Polyurethanchemie darstellen, bestand die der vorliegenden Erfindung zugrundeliegende Aufgabe darin, neue derartige Verbindungen aufzufinden, deren Aminogruppen, bedingt durch die zusätzliche Substitution am aromatischen Ring einen höheren Reaktivitätsunterschied aufweisen und deren Herstellung, bedingt durch die asymmetrische Substitution mit höheren Selektivitäten gelingt.

Diese Aufgabe konnte durch die Bereitstellung des nachstehend näher beschriebenen erfindungsgemäßen Verfahrens gelöst werden.

Gegenstand der Erfindung ist ein Verfahren zur Herstellung von gegebenenfalls Isomerengemische darstellenden und gegebenenfalls bis zu 35 Gew.-%, bezogen auf Gesamtgemisch, an den entsprechenden perhydrierten Diaminen und/oder gegebenenfalls bis zu 10 Gew.-%, bezogen auf Gesamtgemisch, an den entsprechenden unhydrierten aromatischen Diaminen enthaltenden Diaminen der Formel

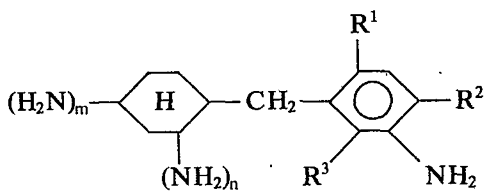

in welcher

$R^1$, $R^2$ und $R^3$ für gleiche oder verschiedene Reste stehen und Wasserstoff oder (gegebenenfalls verzweigte) Alkylgruppen mit 1 bis 12 Kohlenstoffatomen bedeuten, mit der Einschränkung, daß zwei der Reste $R^1$, $R^2$ und $R^3$ für Wasserstoff stehen und

m und n jeweils für 0 oder 1 stehen, mit der Maßgabe, daß die Summe $m+n$ den Wert 1 ergibt, wobei im Falle von m oder $n=0$ die freie Valenz durch Wasserstoff abgesättigt ist,

dadurch gekennzeichnet ist, daß man gegebenenfalls als Isomerengemisch vorliegende, aromatische Diamine der Formel

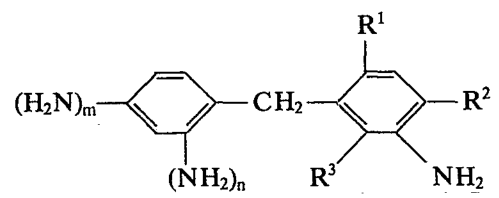

unter Anlagerung von 3 Mol Wasserstoff pro Mol Diamin oder Dinitroverbindungen der Formel

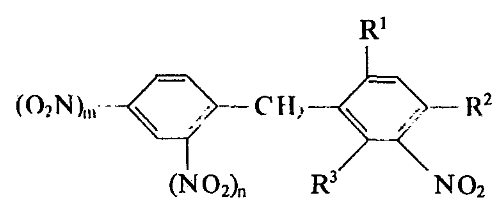

unter Umsetzung von 9 Mol Wasserstoff pro Mol Dinitroverbindung katalytisch hydriert.

Die für das erfindungsgemäße Verfahren als Ausgangsmaterial geeigneten aromatischen Diamine der o. g. allgemeinen Formel können sowohl reine Substanzen als auch Isomerengemische darstellen. Besonders gut geeignet sind die dieser Formel entsprechenden Diamine, für welche jeweils einer der Reste $R^1$, $R^2$ oder $R^3$ für einen Alkylrest mit 1 bis 4 Kohlenstoffatomen, insbesondere einen Methylrest steht, und die beiden verbleibenden Reste Wasserstoff bedeuten.

Beispiele für erfindungsgemäß als Ausgangsmaterial geeignete aromatische Diamine sind

a) die in EP-A-0 046 556 beschriebenen, dort als Ausgangsmaterial zur Herstellung der entsprechenden Diisocyanate verwendeten, gegebenenfalls im Gemisch mit bis zu 40 Gew.-%, bezogen auf Gesamtgemisch, an Diaminen der Formel

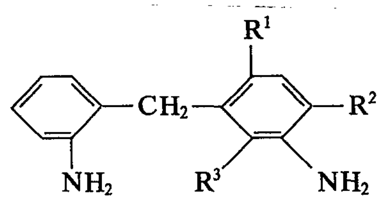

und gegebenenfalls mit bis zu 40 Gew.-%, bezogen auf Gesamtgemisch, an anderen, $C_2-C_{12}$-Alkyl-substituierten Diaminodiphenylmethan-Isomeren vorliegende Diamine der Formel

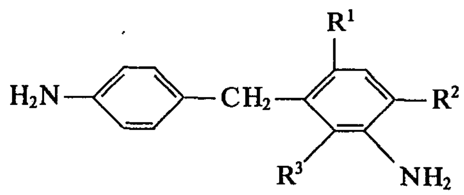

wobei in diesen Formeln die Reste $R^1$, $R^2$ und $R^3$ jeweils gleich oder verschieden sind und Wasserstoff oder eine $C_2-C_{12}$-Alkylgruppe bedeuten, mit der Einschränkung, daß in jeder der beiden Formeln jeweils zwei der Reste $R^1$, $R^2$ und $R^3$ für Wasserstoff stehen und einer der Reste $R^1$, $R^2$ oder $R^3$ für eine Alkylgruppe der genannten Art steht;

b) die diesen Diaminen bzw. Diamingemischen entsprechenden, in der EP-A-0 024 665 beschriebenen und dort als Ausgangsmaterial zur Herstellung der ihnen entsprechenden Polyisocyanate verwendeten Diamine bzw. Diamingemische, die ebenfalls der letztgenannten Formel entsprechen, wobei jedoch 2 der Reste $R^1$, $R^2$ und $R^3$ für Wasserstoff stehen und einer der Reste eine Methylgruppe bedeutet.

Bevorzugte, beim erfindungsgemäßen Verfahren einzusetzende Ausgangsmaterialien sind 3,4'-Diamino-4-methyldiphenylmethan (gemäß Beispiel 9b) der EP-A-0 024 665), dieses Diamin als Hauptkomponente enthaltende Gemisch von Methyl-substituierten Diaminodiphenylmethan-Isomeren gemäß EP-A-0 024 665,

5,4'-Diamino-2-methyldiphenylmethan,
5,2'-Diamino-2-methyldiphenylmethan,
3,2'-Diamino-4-methyldiphenylmethan,
3,4'-Diamino-2-methyldiphenylmethan,
3,2'-Diamino-2-methyldiphenylmethan und

deren Gemische.

Anstelle der beispielhaft genannten aromatischen Diamine können beim erfindungsgemäßen Verfahren als Ausgangsmaterialien auch die diesen Diaminen konstitutionell entsprechenden aromatischen Dinitroverbindungen der o. g. Formel eingesetzt werden, wobei $R^1$, $R^2$, $R^3$, m und n die bereits o. g. Bedeutung haben. Vorzugsweise kommen solche Dinitroverbindungen der genannten Art in Betracht, für welche einer der Reste $R^1$, $R^2$ oder $R^3$ für eine Alkylgruppe mit 1 bis 4, Kohlenstoffatomen und besonders bevorzugt für eine Methylgruppe steht und die beiden anderen Reste Wasserstoff bedeuten. Auch die Dinitroverbindungen können als reine Substanzen oder in Form von Isomerengemischen eingesetzt werden.

Die bevorzugten, einen Alkylsubstituenten der genannten Art aufweisenden, Dinitroverbindungen stellen die Vorstufen der in EP-A-0 024 665 bzw. EP-A-0 046 556 beschriebenen Diamine dar, so daß die oben gemachten Ausführungen bezüglich der Isomerenverteilung in, beim erfindungsgemäßen Verfahren gegebenenfalls einzusetzenden Isomerengemischen, hier ebenfalls Gültigkeit haben. Die Herstellung der bevorzugt geeigneten Dinitroverbindungen erfolgt gemäß den in den genannten Europäischen Patentveröffentlichungen beschriebenen Methoden.

Bei der Durchführung des erfindungsgemäßen Verfahrens werden die als Ausgangsmaterial einzusetzenden aromatischen Diamine bzw. Dinitroverbindungen unter Anlagerung von 3 Mol Wasserstoff pro Mol Diamin bzw. unter Umsetzung von 9 Mol Wasserstoff pro Mol Dinitroverbindung katalytisch hydriert. Dies bedeutet, daß die Hydrierungsreaktion vorzugsweise nach Verbrauch von 3 bzw. 9 Mol Wasserstoff pro Mol an Ausgangsverbindung abgebrochen wird. Die Hydrierung erfolgt bei 20 bis 300° C unter einem Druck von 20 bis 300 bar. Im Falle der Verwendung von Dinitroverbindungen als Ausgangsmaterialien empfiehlt es sich, die zunächst ablaufende Hydrierung der Nitrogruppen innerhalb des Temperaturbereichs von 20 bis 150° C, vorzugsweise 30 bis 100° C, unter einem Druck von 20 bis 150 bar, vorzugsweise 70 bis 140 bar, durchzuführen und anschließend zur Teilhydrierung des aromatischen Kohlenwasserstoffgerüsts bei einer Temperatur von 70 bis 300° C, vorzugsweise von 120 bis 250° C und bei einem Druck von 70 bis 300 bar, vorzugsweise 120 bis 250 bar, durchzuführen. Bei der Verwendung von aromatischen Diaminoverbindungen der beispielhaft genannten Art als erfindungsgemäß einzusetzende Ausgangsmaterialien erfolgt die Hydrierung vorzugsweise unter den letztgenannten Bedingungen. Wie aus NMR-spektroskopischen Untersuchungen hervorgeht, bestehen die teilhydrierten »H6«-Diamine praktisch ausschließlich aus solchen Diaminen, deren Alkylsubstituenten am verbleibenden aromatischen Ring fixiert sind.

Die erfindungsgemäße Hydrierungsreaktion erfolgt in Gegenwart von 0,1 bis 10 Gew.-%, vorzugsweise von 0,1 bis 1 Gew.-%, bezogen auf katalytisch wirksames Metall einerseits und Diamino- bzw. Dinitroverbindung andererseits, eines Hydrierungskatalysators. Geeignete Katalysatoren sind beispielsweise, gegebenenfalls auf inerten Trägern wie Aktivkohle, Kieselgel und insbesondere Aluminiumoxid vorliegende Elemente der 8. Nebengruppe des Periodensystems der Elemente oder katalytisch wirksame anorganische Verbindungen dieser Elemente. Besonders gut geeignet sind z. B. Ruthenium-, Platin-, Rhodium-, Nickel- und/oder Kobaltkatalysatoren in elementarer oder chemisch gebundener Form. Besonders bevorzugt werden Ruthenium oder katalytisch wirksame Rutheniumverbindungen eingesetzt. Beispiele geeigneter Rutheniumverbindungen sind Rutheniumdioxid, Rutheniumtetroxid, Bariumperruthenit, Natrium-, Kalium-, Silber-, Calcium- oder Magnesiumruthenat, Natriumperruthenat, Rutheniumpentafluorid, Rutheniumtetrafluoridhydrat oder Rutheniumtrichlorid. Falls Trägersubstanzen für die Katalysatoren mitverwendet werden, beträgt der Metallgehalt des Trägerkatalysators im allgemeinen 1 bis 10 Gew.-%, vorzugsweise 1 bis 5 Gew.-%. Im übrigen ist selbstverständlich die Art und Menge des einzusetzenden Katalysators keineswegs erfindungswesentlich, da die Hydrierungsreaktion nach den an sich bekannten Methoden des Standes der Technik erfolgt.

Es ist oft zweckmäßig, die erfindungsgemäße Hydrierungsreaktion in Gegenwart von Ammoniak durchzuführen, da Ammoniak unerwünschte Desaminierungsreaktionen und die Bildung von sekundären Aminen als Nebenprodukte unterdrückt. Falls Ammoniak mitverwendet wird, geschieht dies in Mengen von 0,1 bis 30 Gew.-%, vorzugsweise 5 bis 10 Gew.-%, bezogen auf zu hydrierende Ausgangsmaterialien.

Das erfindungsgemäße Verfahren kann lösungsmittelfrei oder in Gegenwart inerter Lösungsmittel durchgeführt werden. Im allgemeinen werden niedrigschmelzende bzw. flüssige Diamine in Substanz, hochschmelzende Diamine und Dinitroverbindungen dagegen in gelöster Form hydriert. Als Lösungsmittel eignen sich unter den Reaktionsbedingungen inerte organische Verbindungen mit niedrigem Siedepunkt, vorzugsweise Alkohole wie Methanol, Ethanol, n-Propanol, i-Propanol oder Ether wie z. B. Dioxan, Tetrahydrofuran oder Diethylether oder Kohlenwasserstoffe wie Cyclohexan. Die Durchführung des erfindungsgemäßen Verfahrens findet kontinuierlich in einem Reaktionsrohr, einer Druckkesselkaskade oder vorzugsweise diskontinuierlich in einem Rührautoklaven statt, indem man den Autoklaven mit Katalysator, der zu hydrierenden Substanz und gegebenenfalls einem Lösungsmittel beschickt, mehrmals mit Inertgas spült und gegebenenfalls Ammoniak zudosiert. Danach drückt man Wasserstoff auf, bringt das Gemisch auf Reaktionstemperatur und hydriert bis die theoretisch erforderliche Wasserstoffmenge absorbiert ist. Nach Abkühlung des Reaktionsgemischs und Abtrennung des Katalysators kann das Verfahrensprodukt destillativ aufgearbeitet werden.

Wie bereits oben ausgeführt ist der wesentliche Vorteil des erfindungsgemäßen Verfahrens gegenüber dem Verfahren der US-PS 2 511 028 darin zu sehen, daß die Teilhydrierung mit einer erhöhten Selektivität erfolgt, so daß wesentlich höhere Ausbeuten an, den eingesetzten Ausgangsmaterialien entsprechenden, Aminocyclohexylmethyl-anilinen erhalten werden. Im allgemeinen liegen in dem, beim erfindungsgemäßen Verfahren anfallenden Reaktionsgemischen, bezogen auf die Gesamtmenge der Diamine, weniger als 35 Gew.-%, vorzugsweise weniger als 20 Gew.-%, an perhydrierten cycloaliphatischen Diaminen und weniger als 10 Gew.-%, vorzugsweise weniger als 5 Gew.-% an unhydrierten aromatischen Diaminen vor. Das Hauptprodukt besteht im allgemeinen aus dem angestrebten teilhydrierten, cycloaliphatischen-aromatischen Diamin. Diese erfindungsgemäße Diamine stellen im allgemeinen Isomerengemische dar und entsprechen bezüglich der Stellungsisomerie weitgehend den eingesetzten Ausgangsmaterialien. Außerdem liegen im allgemeinen stereoisomere Verbindungen im anfallenden Reaktionsgemisch vor. Eine Auftrennung in die einzelnen Stellungs- und Stereoisomeren ist im allgemeinen bezüglich der technischen Verwertbarkeit der erfindungsgemäßen Verfahrensprodukte nicht erforderlich, da es, insbesondere bei der bevorzugten Verwendung der erfindungsgemäßen Verfahrensprodukte als Kettenverlängerungsmittel in der Polyurethanchemie mit abgestufter Reaktivität keineswegs auf die Stellungs- bzw. Stereoisomerie, sondern ausschließlich

darauf ankommt, daß die Hauptkomponente des Diamingemisches aus teilhydrierten Aminocyclohexyl-methylanilinen besteht.

Die nachfolgenden Beispiele dienen der weiteren Erläuterung der Erfindung. Alle Prozentangaben beziehen sich, soweit nichts anderslautendes vermerkt, auf Gewichtsprozente.

Beispiel 1

Ein 1,3-l-Rührautoklav wird mit 500 g (2,36 Mol) des in Beispiel 8c) der EP-A-0 024 665 beschriebenen, bei 150 bis 200° C (0,1333 mbar) destillierenden Diamingemischs mit einer Zusammensetzung von

34,5% 3,4'-Diamino-4-methyldiphenylmethan,
16,9% 5,4'-Diamino-2-methyldiphenylmethan,
7,2% 3,4'-Diamino-2-methyldiphenylmethan,
15,2% 3,2'-Diamino-4-methyldiphenylmethan,
7,5% 5,2'-Diamino-2-methyldiphenylmethan,
3,2% 3,2'-Diamino-2-methyldiphenylmethan und
15,5% anderer nicht charakterisierter Diaminomethyldiphenylmethane

und 50 g eines handelsüblichen Katalysators beschickt. Nach mehrmaligem Spülen mit Stickstoff und Wasserstoff werden 50 g Ammoniak zudosiert, das Reaktionsgemisch auf erhöhte Temperatur gebracht und unter Rühren bei 200 bar hydriert, bis 7,1 Mol Wasserstoff aufgenommen worden sind. Man läßt auf Raumtemperatur abkühlen, entspannt, löst das Rohrprodukt in Methanol auf und trennt den Katalysator durch Filtration ab.

Der Katalysator wird mehrmals mit Methanol gewaschen und wieder verwendet. Das Rohprodukt wird durch Destillation von höhermolekularen Substanzen befreit und gaschromatographisch analysiert. Insgesamt werden 6 Versuche 1a)—1f) unter Variation der Versuchsbedingungen durchgeführt. Die Ergebnisse sind in Tabelle 1 zusammengefaßt.

Tabelle 1

| Nr. | Katalysator | Rk.-Temp. (°C) | Hydrierzeit (h) | Ausbeute (% der Theorie) Mono¹) | $H_{12}$²) | $H_6$³) | $H_0$⁴) | Dest.-Rückstand |
|---|---|---|---|---|---|---|---|---|
| 1a) | Ru (5% auf $Al_2O_3$) | 150 | $2^1/_4$ | <0,1 | 6,3 | 73,0 | 20,5 | 0,2 |
| 1b) | Ru (5% auf $Al_2O_3$) | 140 | $3^3/_4$ | 0,3 | 34,2 | 65,1 | <0,1 | 0,5 |
| 1c) | Ru (5% auf $Al_2O_3$) | 130 | $11^1/_2$ | 0,8 | 28,6 | 70,2 | <0,1 | 0,4 |
| 1d) | Ru (5% auf $Al_2O_3$) | 125 | 22 | 0,6 | 24,1 | 73,5 | 1,4 | 0,4 |
| 1e) | Raney-Ni | 240 | 12 | 0,6 | 3,1 | 35,0 | 55,7 | 5,7 |
| 1f) | Raney-Ni | 250 | 13,5 | 3,6 | 28,0 | 25,1 | 40,0 | 3,3 |

Erläuterungen zu Tabelle 1:

1) Mono = Gemisch desaminierter Produkte »Monoamin«

2) $H_{12}$ = 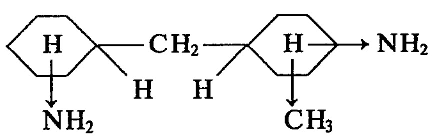 »$H_{12}$-Methyl-MDA«

3) $H_6$ = 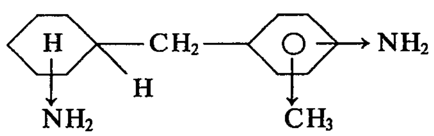 »$H_6$-Methyl-MDA« *)

4) $H_0$ = 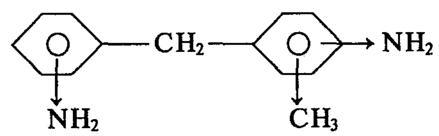 »Methyl-MDA«

*) NMR-spektroskopische Untersuchungen belegen, daß die teilhydrierten Diamine praktisch ausschließlich die gezeigte Struktur besitzen.

Beispiel 2

250 g (1,18 Mol) der bei 198—205°C/0,1 mbar siedenden Hauptfraktion des Polyamingemischs gemäß Beispiel 7c) der EP-A-0 024 665 mit einer dem Ausgangsdiamin entsprechenden Isomerenzusammensetzung und 25 g Ru-Trägerkatalysator (5% Ru auf $Al_2O_3$) werden in einem 0,7-l-Rührautoklaven vorgelegt und nach mehrmaligem Spülen mit Stickstoff und Wasserstoff mit 25 g Ammoniak versetzt. Man erhitzt unter Rühren auf 125°C und bringt im Verlauf von 12,5 Stunden 3,5 Mol Wasserstoff bei 200 bar zur Reaktion. Nach Abtrennung des Katalysators destilliert man das Rohprodukt.

Die bei 110 bis 131°C/0,1 mbar destillierende Hauptfraktion enthielt gemäß gaschromatographischem Befund 211,5 g (82,2% der Theorie) an 1-(1H-Aminocyclohexylmethyl)-3-amino-4-methyl-benzol mit einer Zusammensetzung von

2,4% 2-(2-Amino-4-methyl-benzyl)-cyclohexylamin
31,3% 2-(3-Amino-4-methyl-benzyl)-cyclohexylamin
64,5% 4-(3-Amino-4-methyl-benzyl)-cyclohexylamin
1,8% undefinierter Diamine

26,6 g (11,2% der Theorie) an Diamino-4-methyl-dicyclohexylmethan-Isomeren und 8,5 g (3,8% der Theorie) an unhydriertem, aromatischem Diamin. Als Destillationsrückstand fallen 6,0 g (2,6% der Theorie) an.

Beispiel 3

Gemäß EP-A-0 024 665 wird durch Dinitrierung eines Kondensats aus 2-Methyl-benzylchlorid und Benzol und anschließende Hydrierung der so erhaltenen Dinitroverbindung ein Diamingemisch folgender Zusammensetzung hergestellt:

| | |
|---|---|
| 1% | 6,2'-Diamino-2-methyl-diphenylmethan |
| 14,5% | eines Isomerengemischs aus 3,2'-, 5,2'-Diamino-2-methyl-diphenylmethan |
| 0,9% | 6,3'-Diamino-2-methyl-diphenylmethan |
| 7,9% | eines Isomerengemischs aus 4,2'- und 6,4'-Diamino-2-methyl-diphenylmethan |
| 75% | eines Isomerengemischs, das zu mehr als 80% aus 3,4'-, 5,4'-Diamino-2-methyl-diphenylmethan besteht und |
| 0,7% | undefinierte Polyamine. |

250 g (1,18 Mol) dieses Diamingemischs werden innerhalb von 22 Stunden bei 125°C und 200 bar mit Ru-Trägerkatalysator analog Beispiel 2 hydriert.

Die bei 100 bis 146°C/0,1 mbar siedende Hauptfraktion bestand laut gaschromatographischem Befund aus 41,0 g (15,5% der Theorie) des, dem Ausgangsdiamin entsprechenden, perhydriertem Diamin, 190,9 g (74,2% der Theorie) aus, dem Ausgangsdiamin entsprechenden, (1H-Aminocyclohexyl-methyl)-2-methyl-anilinen und zu 23,8 g (9,5% der Theorie) aus unverändertem Ausgangsmaterial. Als Destillationsrückstand fallen 2,1 g (0,8% der Theorie) an.

Beispiel 4

In einem 0,7-l-Rührautoklaven werden analog Beispiel 2 250 g (1,18 Mol) 5,4'-Diamino-2-methyl-diphenylmethan in Gegenwart von 25 g Ru-Trägerkatalysator (5% Ru auf $Al_2O_3$) und 25 g Ammoniak bei 125°C und 200 bar 11,5 Stunden hydriert.

Die Ausbeuten betragen:

58,4 g (22,1% der Theorie) 5,4'-Diamino-2-methyl-dicyclohexylmethan,
191,9 g (74,6% der Theorie) 4-[5-Amino-2-methylbenzyl]-cyclohexylamin,
6,0 g (2,4% der Theorie) 5,4'-Diamino-2-methyl-diphenylmethan.

Als Destillationsrückstand werden 2,1 g (0,8% der Theorie) isoliert.

## Beispiel 5

Ein 0,7-l-Rührautoklav wird mit 250 g (1,18 Mol) 3,4'-Diamino-4-methyldiphenylmethan und 25 g $Ru/Al_2O_3$ (Ru-Gehalt 5 Gew.-%) beschickt. Nach mehrmaligem Spülen mit Stickstoff und Wasserstoff werden über eine Lewa-Pumpe 25 g flüssiges Ammoniak zudosiert, der Autoklav unter Rühren auf 125°C erwärmt und bei 200 bar hydriert, bis nach 16 Stunden ca. 3,5 Mol Wasserstoff absorbiert sind. Man stellt den Rührer ab, läßt abkühlen, entspannt den Autoklaven und nimmt das Produkt in Methanol auf. Nun filtriert man den Katalysator ab, wäscht mit Methanol nach und vereinigt die Methanollösungen. Nach Abdampfen des Lösungsmittels und Flash-Destillation bei 0,1 bar und 100—150°C erhält man 254 g eines Gemisches, das laut gaschromatographischer Analyse aus 219,5 g (85,3% d. Th.) 4-[3-Amino-4-methylbenzyl]-cyclohexylamin und 34,0 g (12,9% der Theorie) 3,4'-Diamino-4-methyl-dicyclohexylmethan besteht. Durch zusätzliche Destillation über eine Vigreux-Kolonne bei 145—146° C/-0,1 mbar konnten 150 g 4-[3-Amino-4-methylbenzyl]-cyclohexylamin isoliert werden. $C_{14}H_{22}N_2$ Ber.: C 77,06, H 10,10, N 12,84; gef.: C 76,6, H 10,1, N 12,8 (alle Zahlenwerte in %).

## Beispiel 6

Man füllt einen 0,7-l-Rührautoklaven mit 100 g (0,368 Mol) 3,4'-Dinitro-4-methyldiphenylmethan, 100 g Isopropanol und 5 g eines handelsüblichen Rutheniumkatalysators (5 Gew.-% Ru auf $Al_2O_3$), erwärmt unter Rühren auf 90° C und hydriert bei 100 bis 130 bar bis 3,3 Mol Wasserstoff absorbiert sind. Danach erhöht man die Temperatur auf 140°C und den Wasserstoffdruck auf 200 bar, rührt, wenn Druckkonstanz erreicht ist, 2 Stunden bei gleicher Temperatur nach, läßt abkühlen und entspannt den Autoklaven. Der Katalysator wird abfiltriert, mit Isopropanol gewaschen und die Mutterlauge mit der Waschlösung vereinigt. Nach Abdestillieren des Lösungsmittels erhält man 80,2 g eines Gemisches, daß laut gaschromatographischen Befund zu 0,4 g (0,5% der Theorie) aus nicht definierten Monomeren, 8,7 g (2,4% der Theorie) aus 3,4'-Diamino-2-methyldicyclohexylmethan, 64,0 g (79,9% der Theorie) aus 4-[3-Amino-4-methylbenzyl]-cyclohexylamin und 7,1 g aus nicht umgesetzter Ausgangsverbindung besteht. Nach Flashdestillation bei 120—180° C/0,1 mbar fallen 61,1 g Destillat, das zu 0,5 Gew.-% aus 3,4'-Diamino-4-methyl-dicyclohexylmethan, 82,7 Gew.-% aus 4-[3-Amino-4-methylbenzyl]-cyclohexylamin und 7 Gew.-% 3,4'-Diamino-4-methyldiphenylmethan besteht. Der Destillationssumpf beträgt 12,5 g.

## Beispiel 7 (Vergleichsbeispiel)

Man beschickt einen 1,3-l-Rührautoklaven mit 721,7 g (3,65 Mol) 4,4'-Diaminodiphenylmethan, 72,2 g Ruthenium-Katalysator (5% Ru auf $Al_2O_3$), spült mehrmals mit Stickstoff und Wasserstoff und dosiert 72,2 g Ammoniak zu. Danach erhitzt man das Gemisch unter intensivem Rühren auf 125° C und hydriert bei 200 bar bis nach ca. 10 Stunden 10,95 Mol Wasserstoff absorbiert sind. Man läßt den Autoklaven abkühlen, entspannt und nimmt den Autoklaveninhalt mit Methanol auf. Der Katalysator wird abfiltriert, gewaschen und das Rohprodukt einer fraktionierten Destillation unterworfen. Dabei gehen 332,6 g bei 120—135°C/0,1 mbar (Fraktion 1) und 380,6 g bei 135—150°C/0,1 mbar (Fraktion 2) über, während 20,5 g als Destillationsrückstand im Sumpf verbleiben. Laut gaschromatographischem Befund bestehen Fraktion 1 zu 72,4% aus 4,4'-Diaminodicyclohexylmethan und zu 25,5% aus 4-[4-Aminobenzyl]-cyclohexylamin und Fraktion 2 zu 9,0% aus 4,4'-Diaminodicyclohexylmethan und zu 86,3% aus 4-[4-Aminobenzyl]-cyclohexylamin, so daß die Gesamtausbeute aus gewünschtem halbhydrierten Diamin 55,6% der Theorie beträgt.

## Beispiel 8

In einem 0,7-l-Rührautoklav werden 25 g Ruthenium-Aluminiumoxid-Trägerkatalysator und 250 g (1,106 Mol) eines gemäß EP-A-46 556 (Beispiel 5) hergestellten Diaminoethyldiphenylmethan-Isomerengemisches vorgelegt, das folgende Zusammensetzung besitzt:

| | |
|---|---|
| 1,9% | Gemisch aus 2,2'-Diamino-4- und 2,2'-Diamino-6-ethyl-diphenylmethan |
| 11,1% | 4,2'-Diamino-2-ethyldiphenylmethan |
| 20,1% | Gemisch aus 3,2'-Diamino-2-, 3,2'-Diamino-4- und 3,2'-Diamino-6-ethyldiphenylmethan |
| 66,1% | Gemisch, das zu mindestens 80% aus 3,4'-Diamino-2-, 3,4'-Diamino-4- und 3,4'-Diamino-6-ethyldiphenylmethan besteht und bis zu 20% verschiedene andere Diaminoethyldiphenylmethane enthält |
| 0,8% | unbekannte Triamine. |

Nach mehrmaligem Spülen mit Stickstoff und Wasserstoff dosiert man 25 g Ammoniak zu, hydriert bei 130°C und 200 bar bis 3,3 Mol Wasserstoff absorbiert sind. Danach läßt man den Autoklaven abkühlen, entspannt, löst das Produkt in Methanol auf und trennt den Katalysator durch Filtration ab. Nach Abdestillieren des Lösungsmittels werden 255 g eines Diamingemisches gewonnen, das zu 79,4% aus 1H-Amino-ethylbenzyl-cyclohexylamin-Isomeren, deren Zusammensetzung im wesentlichen der des Ausgangsproduktes entspricht, 12,5% aus perhydriertem und 5,7% aus nicht umgesetztem Ausgangsprodukt besteht. Der Rest setzt sich aus nicht identifizierten Monoaminen zusammen.

## Patentansprüche

1. Verfahren zur Herstellung von, gegebenenfalls Isomerengemische darstellenden und gegebenenfalls bis zu 35 Gew.-%, bezogen auf Gesamtgemisch, an den entsprechenden perhydrierten Diaminen und/oder gegebenenfalls mit bis zu 10 Gew.-%, bezogen auf Gesamtgemisch, an den entsprechenden unhydrierten aromatischen Diaminen enthaltenden Diaminen der Formel

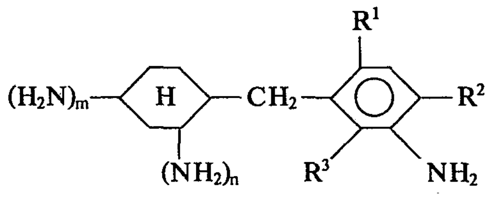

in welcher

$R^1$, $R^2$ und $R^3$ für gleiche oder verschiedene Reste stehen und Wasserstoff oder (gegebenenfalls verzweigte) Alkylgruppen mit 1 bis 12 Kohlenstoffatomen bedeuten, mit der Einschränkung, daß zwei der Reste $R^1$, $R^2$ und $R^3$ für Wasserstoff stehen und

m und n jeweils für 0 oder 1 stehen, mit der Maßgabe, daß die Summe m+n den Wert 1 ergibt, wobei im Falle von m oder n=0 die freie Valenz durch Wasserstoff abgesättigt ist,

dadurch gekennzeichnet, daß man gegebenenfalls als Isomerengemisch vorliegende, aromatische Diamine der Formel

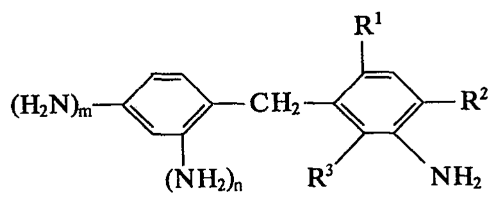

unter Anlagerung von 3 Mol Wasserstoff pro Mol Diamin oder Dinitroverbindungen der Formel

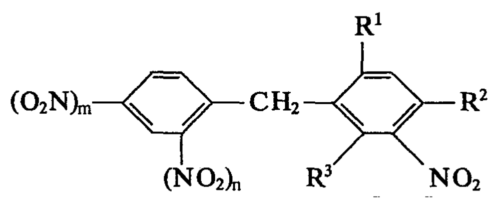

unter Umsetzung von 9 Mol Wasserstoff pro Mol Dinitroverbindung katalytisch hydriert.

2. Verfahren gemäß Anspruch 1, dadurch gekennzeichnet, daß man die Hydrierungsreaktion bei einer Temperatur von 20 bis 300°C und einem Druck von 20 bis 300 bar durchführt.

3. Verfahren gemäß Ansprüchen 1 und 2, dadurch gekennzeichnet, daß man die Hydrierung in Gegenwart von insgesamt 0,1 bis 10 Gew.-%, bezogen auf aromatisches Diamin, mindestens eines, gegebenenfalls auf inerten Trägern vorliegenden Katalysators, ausgewählt aus der Gruppe bestehend aus Elementen der 8. Nebengruppe des Periodensystems der Elemente und katalytisch wirksamen anorganischen Verbindungen dieser Elemente, durchführt.

## Claims

1. Process for the production of diamines, which are optionally isomer mixtures and optionally contain up to 35% by weight, based on the total mixture, of the corresponding perhydrogenated

diamines and/or optionally up to 10% by weight, based on the total mixture, of the corresponding unhydrogenated aromatic diamines, and which have the formula

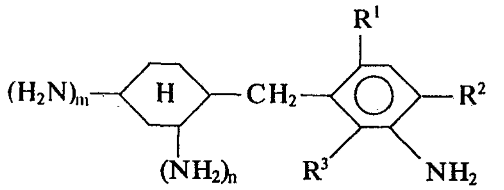

in which

$R^1$, $R^2$ and $R^3$ represent identical or different radicals and denote hydrogen or (optionally branched) alkyl groups with 1 to 12 carbon atoms, with the limitation that two of the radicals $R^1$, $R^2$ and $R^3$ represent hydrogen, and

m and n each represent 0 or 1, with the proviso that the sum of m+n is 1, and if m or n=0 the free valency is saturated by hydrogen,

characterised in that aromatic diamines, optionally present in the form of an isomer mixture, of the formula

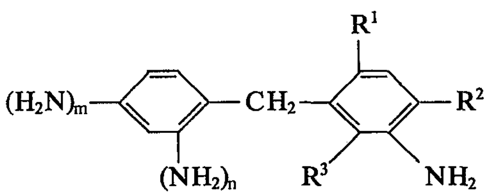

are catalytically hydrogenated with the addition of 3 mols of hydrogen per mol of diamine or dinitro compounds of the formula

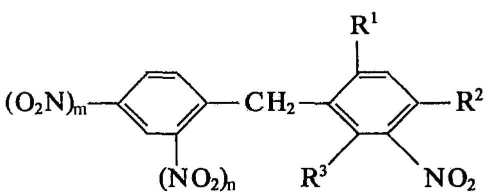

are catalytically hydrogenated with the reaction of 9 mols of hydrogen per mol of dinitro compound.

2. Process according to Claim 1, characterised in that the hydrogenation reaction is carried out at a temperature of 20 to 300° C and under a pressure of 20 to 300 bars.

3. Process according to Claims 1 and 2, characterised in that the hydrogenation is carried out in the presence of a total of 0.1 to 10% by weight, based on the aromatic diamine, of at least one catalyst, which is optionally present on inert supports and is selected from the group consisting of elements of sub-group 8 of the periodic system of elements and catalytically active inorganic compounds of these elements.

**Revendications**

1. Procédé de préparation de diamines, éventuellement à l'état de mélanges d'isomères et contenant éventuellement jusqu'à 35% en poids, par rapport au mélange total, des diamines perhydrogénées correspondantes et/ou éventuellement jusqu'à 10% en poids, par rapport au mélange total, des diamines aromatiques correspondantes non hydrogénées, répondant à la formule:

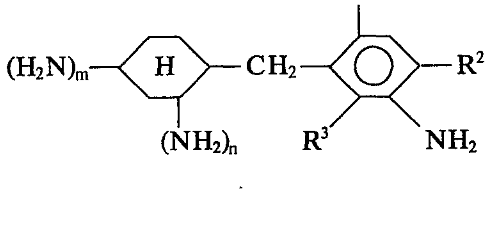

dans laquelle

$R^1$, $R^2$ et $R^3$ ayant des significations identiques ou différentes, représentent l'hydrogène ou des groupes alkyle (éventuellement ramifiés) en $C_1-C_{12}$, avec la restriction que deux des symboles $R^1$, $R^2$ et $R^3$ doivent représenter l'hydrogène, et

m et n sont égaux chacun à 0 ou 1, avec la restriction que la somme $m+n$ est égale à 1, la valence libre existant dans le cas où m ou $n=0$ étant saturée par l'hydrogène,

caractérisé en ce que l'on soumet à hydrogénation catalytique des diamines aromatiques, éventuellement à l'état de mélanges d'isomères, de formule:

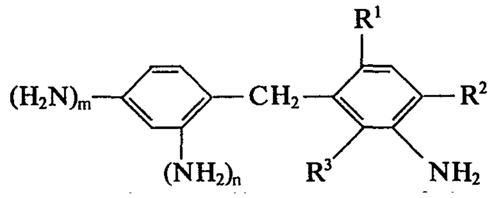

avec fixation par addition de 3 mol d'hydrogène par mole de diamine, ou des composés dinitrés de formule:

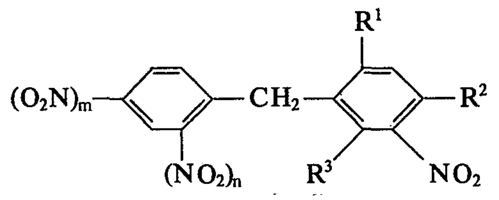

avec réaction de 9 moles d'hydrogène par mole du composé dinitré.

2. Procédé selon la revendication 1, caractérisé en ce que l'on effectue la réaction d'hydrogénation à une température de 20 à 300° C sous une pression de 20 à 300 bars.

3. Procédé selon les revendications 1 et 2, caractérisé en ce que l'on effectue l'hydrogénation en présence de 0,1 à 10% en poids au total, par rapport à la diamine aromatique, d'au moins un catalyseur, éventuellement sur support inerte, choisi dans le groupe consistant en les éléments du huitième sous-groupe de la Classification Périodique des Eléments et les composés minéraux de ces éléments possédant l'activité catalytique.